# EUROPÄISCHE PATENTSCHRIFT

(11) **EP 2 188 317 B1**
(45) Veröffentlichungstag und Bekanntmachung des Hinweises auf die Patenterteilung: **30.01.2013**
(21) Anmeldenummer: 08801888.2
(22) Anmeldetag: 06.09.2008
(51) Int. Cl.: C08F 220/38, G02B 1/04

(54) **VERBESSERTES VERFAHREN ZUR HERSTELLUNG VON GETÖNTEN POLYMEREN**
IMPROVED PROCESS FOR PREPARING TINTED POLYMERS
PROCÉDÉ AMÉLIORÉ DE FABRICATION DE POLYMÈRES TEINTÉS

(30) Priorität: 13.09.2007 GB 0717877
(43) Veröffentlichungstag der Anmeldung: 26.05.2010
(73) Patentinhaber: Geo Specialty Chemicals UK Limited, Bristol BS2 0ZX (GB)
(72) Erfinder: McKENNA, Peter, Essex CO11 2HL (GB); GRAHAM, Michael, Brett, Andover Hampshire SP10 2AT (GB); MATTHEWS, Melissa, Southampton Hampshire SO45 3HR (GB)
(74) Vertreter: Scott, Susan Margaret
(86) Internationale Anmeldenummer: PCT/EP2008/007296
(87) Internationale Veröffentlichungsnummer: WO 2009/036903

(56) Entgegenhaltungen:
- GB-A- 1 400 892

## Beschreibung

Die vorliegende Erfindung betrifft ein verbessertes Verfahren zur Herstellung von getönten Polymermaterialien, insbesondere solchen zur Verwendung in medizintechnischen Vorrichtungen, insbesondere Kontaktlinsen.

Kontaktlinsen werden schon seit vielen Jahren als Sehhilfen genutzt. Es ist gelegentlich erwünscht, diese Linsen mit einer Farbtönung zu versehen, wozu mehrere Möglichkeiten bekannt sind. Eine frühe Technik zum Tönen von Linsen beruhte auf Pigmenteinbau durch Suspendierung von kolloidem Pigment im Monomer vor dessen Polymerisation. Beispiele für derartiges Pigment sind C.I. Pigment blue 15, C.I. Pigment Violet 23, C.I. Pigment Blue 36, C.I. Vat orange 1, C.I. Vat brown 1, C.I. Vat yellow 3, C.I. Vat Blue 6 und C.I. vat Green 1. Nachteilig an den Pigmenten war die Schwierigkeit, ausreichend kleine Teilchengrößen zu erzielen, so daß das Pigment nicht sichtbar und homogen war, und die beschränkte Lagerstabilität des Kolloids aufwies.

Gemäß einem gängigen Verfahren wird die Linse hergestellt, anschließend mit einer Lösung eines Farbstoffs beaufschlagt und der Farbstoff mit dem die Linse bildenden Polymer verbunden. Ein derartiges Verfahren wird zum Beispiel in der US-PS 4.553.975 beschrieben. Danach werden aus einem polymeren Linsenmaterial hergestellte vorgeformte Kontaktlinsen mit einem Reaktivfarbstoff so umgesetzt, daß sich der Farbstoff seitenständig mit im Polymer vorliegenden Hydroxy-, Amino-, Amido- oder Mercaptogruppen verbindet.
Alternativ dazu ist es gemäß der US-PS 4.553.975 auch möglich, ein Monomer wie HEMA vor der Polymerisation mit Reaktivfarbstoff umzusetzen. Dabei reagiert der Farbstoff wiederum mit der Hydroxygruppe des HEMA; ein im Verfahren eingesetztes Monomer muß also mindestens eine funktionelle Gruppe enthalten, die dazu befähigt ist, sich mit einem Reaktivfarbstoff umzusetzen. Beispiele für derartige funktionelle Gruppen sind Hydroxy-, Amino-, Amid- und Thiogruppen. Dabei muß der Reaktivfarbstoff befähigt sein, eine etherartige Verknüpfung zu bilden.

Ein spezielles Verfahren dieser letzten Art wird in EP 0 595 575 beschrieben, wonach man eine weiche Kontaktlinse mit einer Tönung versieht, indem man einen Halogentriazin-Farbstoff mit einem hydrophilen Monomer vor der Polymerisation zu einem Farbstoff-Monomer-Produkt umsetzt, welches man anschließend mit weiterem Monomer polymerisiert. Dabei reagiert der Farbstoff im anfänglichen Reaktionsschritt mit der Hydroxygruppe eines Monomers wie HEMA, wobei man das dabei entstandene Monomer, das immer noch die aus HEMA stammende Vinylgruppe enthält, über jene Vinylgruppe mit weiterem HEMA copolymerisiert. In EP 0 963 761 wird eine ähnliche Technologie verwendet, und ein ähnliches Verfahren wird in JP 08 327954 beschrieben, wobei man einen Farbstoff mit einem Monomer vor der Polymerisation mit Hilfe einer alkalischen Lösung verbindet.

Bekannt sind auch Versuche, den Farbstoff durch Polymerisation des hydrophilen Monomers im Beisein des Farbstoffs in die Linse einzubauen. So wird beispielsweise in der US-PS 5.151.106 ein Verfahren beschrieben, bei dem man einen Reaktivfarbstoff bei der Bildung des Polymers darin einbaut, wobei der Reaktivfarbstoff im Polymer eingeschlossen ist. Nach der Polymerisation wird das Produkt mit einer Base behandelt und so der Farbstoff mit dem Polymer verbunden.

Einen anderen Weg beschreitet man in der US-PS 5.055.602. Danach wird difunktionelles Anthrachinonmonomer offenbart, in dem die beiden Aminogruppen eines Anthrachinonfarbstoffs zu einem polymerisierbaren, ungesättigten organischen Rest funktionalisiert sind. Derartige Verbindungen, für die das 1,4-Bis(4-(2-methacryloxyethyl)phenylamino)anthrachinon typisch ist, kann man anschließend mit anderen Monomeren zu Polymeren copolymerisieren, in denen die Anthrachinongruppierung in das Polymer quervernetzt ist.

In der älteren Schrift GB 1.400.892 wird ein Verfahren zur Herstellung einer Kontaktlinse beschrieben, bei dem man mindestens einen Methacrylsäureester mit einem definierten Reaktivfarbstoff copolymerisiert.

Es wurde nun gefunden, daß man durch Einsatz eines speziellen monofunktionellen Farbstoffs, den man mit geeigneten Monomeren copolymerisieren kann, ein wertvolles Produkt erhalten kann. Die Erfindung eignet sich insbesondere zur Verwendung bei der Herstellung von Polymeren für Kontaktlinsen und andere medizintechnische Vorrichtungen.

Gegenstand der vorliegenden Erfindung ist somit ein Verfahren zur Herstellung eines getönten Polymers, bei dem man eine Verbindung der Formel I: 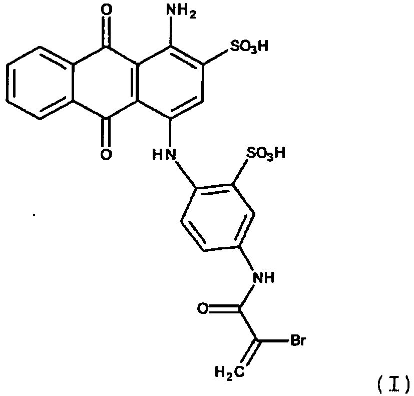 oder ein Salz davon mit einem eine Vinylgruppe enthaltenden, polymerisierbaren Monomer copolymerisiert.

Bevorzugt verwendet man die Verbindung der Formel (I) in Form eines Salzes, insbesondere eines Alkalimetallsalzes, zum Beispiel eines Natriumsalzes.

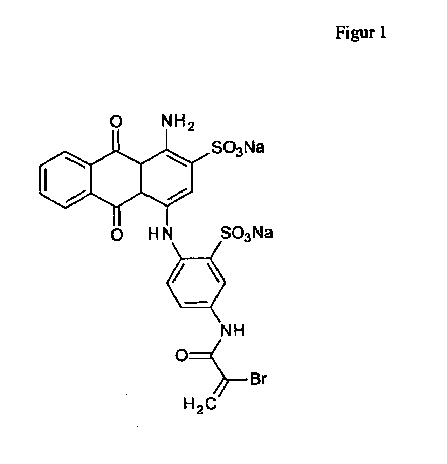

In der Figur 1 ist die Natriumsalzform der in der vorliegenden Erfindung verwendeten Verbindung dargestellt. Es handelt sich dabei um den handelsüblichen Farbstoff Reactive Blue 69.

Erfindungsgemäß muß man im Gegensatz zu der US-PS 4.553.975 weder den Farbstoff an eine Hydroxygruppe des Polymers fixieren noch im Gegensatz zu EP 595 575 vorher einen Farbstoff mit der Hydroxygruppe des zur Herstellung des Polymers eingesetzten Monomers umsetzen. Da zudem noch der Farbstoff in der Polymerhauptkette eingebaut ist, kann der Farbstoff nach der Bildung auch nicht aus dem Polymer herausgelöst werden.

Die erfindungsgemäß hergestellten Polymere sind neu. Die Erfindung betrifft somit auch ein Polymer, enthaltend in der Hauptkette Einheiten, die sich von einer Verbindung der Formel (I) ableiten, sowie Einheiten, die sich von mindestens einem anderen polymerisierbaren, vinylgruppenhaltigen Monomer ableiten.

Bevorzugt eignet sich das nach dem erfindungsgemäßen Verfahren hergestellte Polymer zur Verwendung in medizintechnischen Vorrichtungen wie beispielsweise Kathetern, Implantaten, Stents, Intraokularlinsen und Kontaktlinsen, insbesondere Kontaktlinsen, und ganz besonders Kontaktlinsen, insbesondere weichen Kontaktlinsen. Ein Vorteil der vorliegenden Erfindung liegt darin, das erfindungsgemäß hergestellte weiche Kontaktlinsen sofort nach Entnahme aus der Form, in der sie hergestellt wurden, hydratiert und gebrauchsfertig sind. Im Gegensatz zu der GB-PS 1.400.982, S. 3 Z. 8-10, "... das mit einem Reaktivfarbstoff copolymerisierte Methacrylpolymer wird durch Formen und Polieren in die gewünschte Farblinse überführt" ist kein Polieren erforderlich.

Bei weichen Kontaktlinsen handelt es sich um gelartige Linsen, hergestellt durch die Polymerisation von hydrophilen Monomeren. Zu geeigneten hydrophilen Monomeren zählen beispielsweise Hydroxyester der Acryl-, Methacryl-, Itacon-, Fumar- und Maleinsäure, N,N-Dimethylacrylamid (DMA), N-Vinylpyrrolidon (NVP) und Styrolsulfonsäure.

Bevorzugt dient als hydrophiles Monomer ein Hydroxyester der Acryl- oder Methacrylsäure wie zum Beispiel Hydroxyethylmethacrylat (HEMA) oder Hydroxyethylacrylat (HEA), Glycerylmethacrylat, Hydroxypropylmethacrylat, Hydroxypropylacrylat und Hydroxytrimethylenacrylat. Als hydrophiles Monomer wird HEMA ganz besonders bevorzugt eingesetzt.

Das hydrophile Monomer kann man gewünschtenfalls mit einem geeigneten Comonomeren copolymerisieren, wie zum Beispiel mit einem hydrophoben Comonomer, um gewünschte Eigenschaften zu erzielen. So kann man neben hydrophilen Monomeren beispielsweise Acryl- und Methacrylsäure, Alkyl- und Cycloalkylacrylat und -methacrylat, N-(1,1-Dimethyl-3-oxobutyl)acrylamid und heterocyclische N-Vinylverbindungen, enthaltend eine Carbonylgruppe in Nachbarschaft zu dem Stickstoff im Ring, wie zum Beispiel N-Vinylpyrrolidon, einsetzen. So kann man bei Verwendung von Methacrylsäure (MAA) als Comonomer den beim Gleichgewicht bestehenden Wassergehalt der Linse erhöhen. Zusätzlich kann man zur Verbesserung der Formstabilität der Linse polyfunktionelle Vernetzungsmonomere, wie Ethylenglykoldimethacrylat (EGMDA) und Trimethylolpropantrimethacrylat (TMPTMA), in kleinen Mengen einsetzen. Ferner kann man zur Verbesserung der Polymereigenschaften Vernetzungsmittel einsetzen. Zu Beispielen für gängige Vernetzungsmittel zählen beispielsweise Trimethylolpropantrimethacrylat, Ethylenglykoldimethacrylate (EDMA), Diethylenglykoldimethacrylat, Triethylenglykoldimethacrylat und Diethylenglykolbisallylcarbonat.

Nach dem erfindungsgemäßen Verfahren kann man auch getönte Kontaktlinsen herstellen, die auf Siliconhydrogelen basieren. Dazu finden sich Angaben beispielsweise in den US-PSen 4.139.513, 4.711.943, 5.070.215, 5.610.252, 6.867.425, 6.020.445, 5.998.498 und 6.822.016.

Ferner kann man nach dem erfindungsgemäßen Verfahren auch getönte harte Kontaktlinsen herstellen. Als Monomer zur Herstellung von harten Kontaktlinsen eignet sich Methylmethacrylat, Celluloseacetatbutyrat (CAB), Alkylmethacrylat, Siloxanylmethacrylat, Polysiloxanmethacrylat und Fluoralkylmethacrylat.

Für kontaktlinsenfremde Anwendungszwecke kann man das erfindungsgemäße Verfahren auch in einem beliebigen vinylhaltigen Monomer durchführen.

Unter allen Aspekten der vorliegenden Erfindung kann die Reaktionsmischung neben Farbstoff und Monomer auch einen Initiator für die Polymerisationsreaktion enthalten, und zwar bevorzugt in einer Menge von etwa 0,05 bis 1%. Zu typischen Beispielen für Initiatoren zählen Lauroylperoxid, Benzoylperoxid, Isopropylpercarbonat, Azobisisobutyronitril, Benzoin und seine Ester sowie Redoxsysteme wie Ammoniumpersulfat/Natriummetabisulfit. Statt dessen oder auch zusätzlich kann man die Polymerisationsreaktion auch durch Einwirkung ionisierender oder aktinischer Strahlung, wie zum Beispiel UV-Licht, sichtbares Licht, Röntgenstrahlen, Elektronenstrahlen oder eine radioaktive Quelle initiieren.

Die Polymerisation kann man wie an sich bekannt in Substanz oder in Gegenwart eines Lösungs- oder Verdünnungsmittels durchführen. Zur Herstellung von Polymeren zur Verwendung in medizintechnischen Vorrichtungen kann man bioverträgliche Lösungs- oder Verdünnungsmittel einsetzen, wie zum Beispiel Polyethylenglykole, Glycerin, Propylenglykol, Dipropylenglykol, Wasser und Mischungen davon.

Geeignete Polymerisationsbedingungen sind dem Fachmann hinreichend bekannt. Im vorliegenden Falle ist es wichtig, die Bedingungen so zu wählen, daß der Farbstoff mit dem Monomer copolymerisiert und sich nicht etwa mit einer im Monomer vorliegenden Hydroxygruppe, wie zum Beispiel eine Hydroxygruppe in HEMA, zu einer Etherbindung mit dem Monomer umsetzt. Basische Bedingungen sind also zweckmäßigerweise zu vermeiden.

Die der Reaktionsmischung zuzusetzende Menge an Reaktivfarbstoff richtet sich nach der geforderten Farbtiefe. Ganz allgemein kann sie beispielsweise im Bereich von 0,01 bis etwa 0,75, bevorzugt 0,05 bis 0,5 Gew.-%, bezogen auf das Monomergewicht, liegen.

Gemäß einem bevorzugtem Verfahren zur Herstellung einer Kontaktlinse wird eine linsenbildende Menge einer polymerisierbaren Mischung in eine der Form der fertigen Kontaktlinse im hydratierten Zustand entsprechenden Form dosiert. Danach wird die polymerisierbare Mischung in der Form gehärtet, beispielsweise durch Anwendung ionisierender oder aktinischer Strahlung wie oben beschrieben.

Die nachstehenden Beispiele sollen die Erfindung näher erläutern.

### BESPIEL 1

### Herstellung getönter Kontaktlinsen auf HEMA-Basis

Aus der in Tabelle 1 aufgeführten Zusammensetzung wurde eine homogene Monomermischung hergestellt. Davon wurden Tropfen in Kontaktlinsenformen gegeben und anschließend zwei Stunden lang unter einer fluoreszierenden UV-Lichtquelle (Radio Spares: Katalognummer 497-656) polymerisiert.

**Tabelle 1**

| | |
|---|---|
| HEMA ULTRA | 98,44 Gew.-% |
| Pluronic F147 | 1,00 Gew.-% |
| Ethylenglykoldimethacrylat | 0,34 Gew.-% |
| Benzoinmethylether | 0,17 Gew.-% |
| Farbstoff (Reactive Blue 69) | 500 ppm |

Die anschließend aus der obigen Rezeptur hergestellten Linsen wurden in einer gepufferten Kochsalzlösung gequellt. Anschließend wurden sie auf Farbstabilität durch Sieden in gepufferter Kochsalzlösung und Untersuchung der Kochsalzlösung auf ausgetretenen Farbstoff geprüft.

Kein Farbstoff wurde in die Kochsalzlösung abgegeben. Die Kochsalzlösung blieb klar (wasserweiß).

### BEISPIEL 2

### Vergleich getönter Kontaktlinsen

Aus den in Tabelle 2 aufgeführten Zusammensetzungen wurden zwei filtrierte homogene Mönomermischungen hergestellt. Davon wurden Tropfen in Kontaktlinsenformen gegeben und anschließend zwei Stunden lang unter einer fluoreszierenden UV-Lichtquelle (Radio Spares: Katalognummer 497-656) polymerisiert.

**Tabelle 2**

| | Linsen A mit Reactive Blue 69 | Linsen B mit Reactive Blue 4 |
|---|---|---|
| HEMA ULTRA | 98,48 Gew.-% | 98,39 Gew.-% |
| Pluronic F147 | 1,00 Gew.-% | 1,00 Gew.-% |
| Ethylenglykoldimethacrylat | 0,34 Gew.-% | 0,34 Gew.-% |
| Benzoinmethylether | 0,17 Gew.-% | 0,17 Gew.-% |
| Farbstoff | 100 ppm | 1000 ppm |

Die anschließend aus der obigen Rezeptur hergestellten Trockenlinsen wurden verglichen, wobei die Linsen A mit 100 ppm Reactive Blue 69 visuell in Farbintensität denen mit 1000 ppm Reactive Blue 4 (in handelsüblichen Kontaktlinsen verwendet) entsprachen.

### BEISPIEL 3

### Herstellung getönter Kontaktlinsen auf GMMA-Basis

Zwei verschiedene Linsenpräparate wurden mit 2,3-Dihydroxypropylmethacrylat (Glycerinmonomethacrylat) als Hauptbestandteil gemäß der nachstehenden Tabelle 3 hergestellt. Die Linsen wurden analog Beispiel 1 gehärtet und mit handelsüblicher Kochsalzlösung zu einem stabilen Hydrogel hydratiert.

**Tabelle 3**

| | Linse a | Linse b |
|---|---|---|
| Material | Zusammensetzung | Zusammensetzung |
| Glycerolmonomethacrylat | 91,9% | 32,8% |
| Hydroxyethylmethacrylat | - | 65,63% |
| N-Methylpyrrolidon | 8,2% | - |
| Pluronic F-127 | - | 1,00% |
| Ethylenglykoldimethacrylat | - | 0,34% |
| Benzoinmethylether | 0,33% | 0,17% |
| Reactive Blue 69 | 500 ppm | 500 ppm |

Bei beiden Präparaten wurde der Farbstoff im Polymer zurückgehalten und nicht in die Kochsalzlösung abgegeben.

### BESPIEL 4

### Herstellung getönter wasserreicher Kontaktlinsen auf HEMA-Basis

Nach dem Rezept gemäß Tabelle 4 wurde ein wasserreiches Präparat hergestellt. Die Linsen wurden analog Beispiel 8 gehärtet und mit handelsüblicher Kochsalzlösung zu einem stabilen Hydrogel hydratiert.

**Tabelle 4**

| Material | Zusammensetzung |
|---|---|
| Hydroxyethylmethacrylat | 96,44% |
| Methacrylsäure | 2,00% |
| Pluronic F-127 | 1,00% |
| Ethylenglykoldimethacrylat | 0,34% |
| Benzoinmethylether | 0,17% |
| Reactive Blue 69 | 500 ppm |

Bei dem Präparat wurde der Farbstoff im Polymer zurückgehalten und nicht in die Kochsalzlösung abgegeben.

### BEISPIEL 5

### Herstellung getönter Kontaktlinsen auf Siliconhydrogel-Basis

Ein Siliconhydrogelpräparat wurde gemäß Tabelle 5 hergestellt. Die Linsen wurden analog Beispiel 8 gehärtet und mit handelsüblicher Kochsalzlösung zu einem stabilen Hydrogel hydratiert.

**Tabelle 5**

| Material | Zusammensetzung |
|---|---|
| Dimethacrylamid | 39,21% |
| Tris(trimethylsiloxy)silylpropylmethacrylat | 55,32% |
| N-Methylpyrrolidon | 4,04% |
| Ethylenglykoldimethacrylat | 1,01% |
| Benzoinmethylether | 0,41% |
| Reactive Blue 69 | 500 ppm |

Bei dem Präparat wurde der Farbstoff im Polymer zurückgehalten und nicht in die Kochsalzlösung abgegeben.

## Patentansprüche

1. Verfahren zur Herstellung eines getönten Polymers, bei dem man eine Verbindung der Formel I: 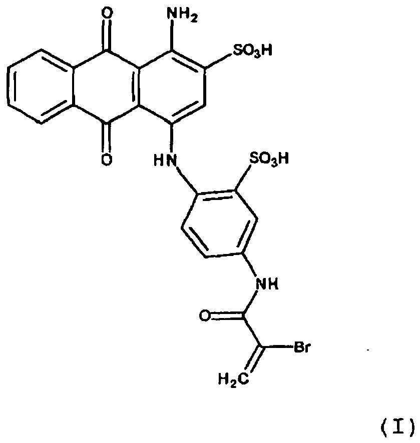 oder ein Salz davon mit einem eine Vinylgruppe enthaltenden, polymerisierbaren Monomer copolymerisiert.

2. Verfahren nach Anspruch 1, bei dem man ein Salz einer Verbindung der Formel (I) einsetzt.

3. Verfahren nach Anspruch 2, bei dem man als Salz ein Natriumsalz einsetzt.

4. Verfahren nach einem der vorhergehenden Ansprüche, bei dem man das eine Vinylgruppe enthaltende, polymerisierbare Monomer auswählt aus der Gruppe, bestehend aus Hydroxyestern der Acryl-, Methacryl-, Itacon-, Fumar- und Maleinsäure, N,N-Dimethylacrylamid, N-Vinylpyrrolidon und Styrolsulfonsäure.

5. Verfahren nach Anspruch 4, bei dem man als polymerisierbares Monomer einen Hydroxyester der Acryl- oder Methacrylsäure einsetzt.

6. Verfahren nach Anspruch 5, bei dem man als polymerisierbares Monomer Hydroxyethylmethacrylat einsetzt.

7. Verfahren nach einem der Ansprüche 1 bis 3, bei dem man als eine Vinylgruppe enthaltendes, polymerisierbares Monomer ein Siliconhydrogel einsetzt.

8. Polymer, enthaltend in der Hauptkette Einheiten, die sich von einer Verbindung der allgemeinen Formel (I) gemäß einem der Ansprüche 1 bis 3 ableiten, sowie Einheiten, die sich von mindestens einem anderen polymerisierbaren, vinylgruppenhaltigen Monomer ableiten.

9. Medizintechnische Vorrichtung, enthaltend ein Polymer gemäß Anspruch 8, wobei die medizintechnischen Vorrichtungen ausgewählt werden aus Kathetern, Implantaten, Stents, Intraokularlinsen und Kontaktlinsen.

10. Kontaktlinse aus einem Polymer gemäß Anspruch 8.

## Claims

1. A process for the production of a tinted polymer, wherein a compound of the formula I: 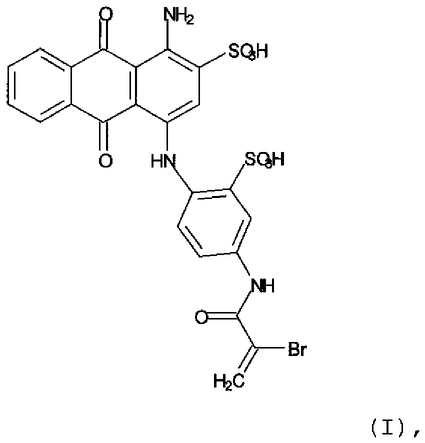 or a salt thereof, is copolymerised with a polymerisable monomer containing a vinyl group.

2. A process according to claim 1, wherein a salt of a compound of the formula (I) is used.

3. A process according to claim 2, wherein the salt used is a sodium salt.

4. A process according to any one of the preceding claims, wherein the polymerisable monomer containing a vinyl group is selected from the group consisting of hydroxy esters of acrylic, methacrylic, itaconic, fumaric and maleic acid, N,N-dimethylacrylamide, N-vinyl pyrrolidone and styrene sulfonic acid.

5. A process according to claim 4, wherein the polymerisable monomer used is a hydroxy ester of acrylic or methacrylic acid.

6. A process according to claim 5, wherein the polymerisable monomer used is hydroxyethylmethacrylate.

7. A process according to any one of claims 1 to 3, wherein the polymerisable monomer containing a vinyl group used is a silicone hydrogel.

8. A polymer containing, in the main chain, units derived from a compound of the general formula (I) according to any one of claims 1 to 3, and also units derived from at least one other polymerisable, vinyl-group-containing monomer.

9. A medical device containing a polymer according to claim 8, wherein the medical devices are selected from catheters, implants, stents, intraocular lenses and contact lenses.

10. A contact lens made from a polymer according to claim 8.

## Revendications

1. Procédé de production d'un polymère teinté, dans lequel on copolymérise un composé de formule I : 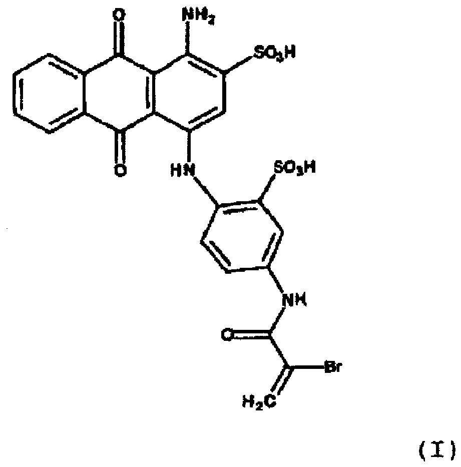 ou un sel de celui-ci avec un monomère polymérisable contenant un groupe vinyle.

2. Procédé selon la revendication 1, dans lequel on utilise un sel d'un composé de formule (I).

3. Procédé selon la revendication 2, dans lequel on utilise comme sel, un sel de sodium.

4. Procédé selon l'une des revendications précédentes, dans lequel on choisit le monomère polymérisable contenant un groupe vinyle dans le groupe comprenant des hydroxyesters d'acide acrylique, méthacrylique, itoconique, fumarique et maléique, le N,N-diméthylacrylamide, la N-vinylpyrrolidone et l'acide styrène-sulfonique.

5. Procédé selon la revendication 4, dans lequel on utilise comme monomère polymérisable, un hydroxyester d'acide acrylique ou méthacrylique.

6. Procédé selon la revendication 5, dans lequel on utilise comme monomère polymérisable, un hydroxyéthylméthacrylate.

7. Procédé selon l'une des revendications 1 à 3, dans lequel on utilise comme monomère polymérisable contenant un groupe vinyle, un hydrogel de silicone.

8. Polymère contenant, dans la chaîne principale, des motifs qui sont dérivés d'un composé de formule générale (I) selon l'une des revendications 1 à 3, et des motifs qui sont dérivés d'au moins un autre monomère polymérisable contenant un groupe vinyle.

9. Dispositif de technique médicale contenant un polymère selon la revendication 8, les dispositifs de technique médicale étant choisis parmi les cathéters, les implants, les stents, les lentilles intraoculaires et les lentilles de contact.

10. Lentille de contact en un polymère selon la revendication 8.
